(19) Europäisches Patentamt / European Patent Office / Office européen des brevets

(11) **EP 4 465 384 A1**

(12) **EUROPEAN PATENT APPLICATION**
published in accordance with Art. 153(4) EPC

(43) Date of publication:
**20.11.2024 Bulletin 2024/47**

(21) Application number: **22920490.4**

(22) Date of filing: **01.12.2022**

(51) International Patent Classification (IPC):
$H01M\ 4/48\ ^{(2010.01)}$    $C01B\ 33/32\ ^{(2006.01)}$
$H01M\ 4/36\ ^{(2006.01)}$    $H01M\ 4/485\ ^{(2010.01)}$

(52) Cooperative Patent Classification (CPC):
**C01B 33/32; H01M 4/36; H01M 4/48; H01M 4/485;**
**Y02E 60/10**

(86) International application number:
**PCT/JP2022/044441**

(87) International publication number:
**WO 2023/135970 (20.07.2023 Gazette 2023/29)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **11.01.2022 JP 2022002143**

(71) Applicant: **SHIN-ETSU CHEMICAL CO., LTD.**
**Tokyo 1000005 (JP)**

(72) Inventors:
• **HIROSE Takakazu**
**Annaka-shi, Gunma 379-0125 (JP)**

• **TAKAHASHI Kohta**
**Annaka-shi, Gunma 379-0125 (JP)**
• **OSAWA Yusuke**
**Annaka-shi, Gunma 379-0125 (JP)**
• **KANESATO Shuhei**
**Tokyo 100-0005 (JP)**
• **MURAYAMA Masaki**
**Annaka-shi, Gunma 379-0125 (JP)**
• **SAKAI Reiko**
**Annaka-shi, Gunma 379-0125 (JP)**

(74) Representative: **Sonnenhauser, Thomas Martin**
**Wuesthoff & Wuesthoff**
**Patentanwälte und Rechtsanwalt PartG mbB**
**Schweigerstraße 2**
**81541 München (DE)**

(54) **NEGATIVE ELECTRODE ACTIVE MATERIAL AND NEGATIVE ELECTRODE**

(57) The present invention is a negative electrode active material including negative electrode active material particles, wherein the negative electrode active material particles contain silicon oxide particles coated with a carbon layer, at least a part of the silicon oxide particles contains at least one selected from the group consisting of $Li_2SiO_3$, $Li_4SiO_4$, and $Li_6Si_2O_7$, and a part of at least an outermost layer of the negative electrode active material particles is coated with a layer of a plasticizer. This can provide: a negative electrode active material that can increase stability in slurry formation while achieving sufficient battery characteristics; and a negative electrode including such a negative electrode active material.

[FIG. 3]

EP 4 465 384 A1

**Description**

TECHNICAL FIELD

The present invention relates to a negative electrode active material and a negative electrode.

BACKGROUND ART

In recent years, small-sized electronic devices represented by mobile terminals have been widely used, and further size reduction, weight reduction, and lifetime extension are strongly required. For such market requirements, in particular, development of a small, lightweight secondary battery that can yield high energy density is in progress. This secondary battery is investigated to be applied for not only small electronic devices but also large electronic devices represented by automobiles and power storage systems represented by a house.

Among these, a lithium-ion secondary battery is highly promising because the size reduction and increase in capacity can be easily achieved, and it can yield a higher energy density than a lead battery or a nickelcadmium battery.

The above lithium-ion secondary battery has a positive electrode, a negative electrode, a separator, and an electrolyte liquid, and the negative electrode contains a negative electrode active material, which is involved with charge-discharge reactions.

For this negative electrode active material, a carbon-based active material is widely used, and meanwhile, the recent market demands have required further increase in the battery capacity. For increasing the battery capacity, use of silicon as a material for the negative electrode active material is investigated. This is because a theoretical capacity of silicon (4199 mAh/g) is ten times or more higher than a theoretical capacity of graphite (372 mAh/g), and thereby remarkable increase in the battery capacity can be expected. Development of the silicon material as the material for the negative electrode active material is investigated on not only a silicon single substance but also compounds, etc. represented by an alloy and an oxide. A form of the active material is investigated from an applying type, which is standard for the carbon-based active material, to an integrated type in which the active material is directly deposited on a current collector.

However, use of silicon as a main raw material of the negative electrode active material causes the negative electrode active material to expand and contract during charge-and-discharge, easily leading to cracking mainly near a surface layer of the negative electrode active material. In addition, an ionic substance is generated inside the active material, which causes the negative electrode active material to be a fragile substance. Cracking of the surface layer of the negative electrode active material consequently generates a new surface to increase a reaction area of the active material. In this time, a decomposition reaction of the electrolyte liquid occurs on the new surface, and a coating being a decomposed product of the electrolyte liquid is formed on the new surface to consume the electrolyte liquid. Therefore, cycle characteristics are likely to be deteriorated.

There have been various investigations so far on the negative electrode material for the lithium-ion secondary battery with the silicon-based material as a main material and on electrode structure in order to improve battery initial efficiency and the cycle characteristics.

Specifically, silicon and amorphous silicon dioxide are simultaneously deposited by using a gas phase method for a purpose of obtaining good cycle characteristics and high safety (see Patent Document 1, for example). To obtain a high battery capacity and safety, a carbon material (electron conductive material) is provided on a surface layer of a silicon oxide particle (see Patent Document 2, for example). To improve the cycle characteristics and to obtain high input-output characteristics, an active material containing silicon and oxygen is produced, and an active material layer having a higher oxygen proportion near a current collector is formed (see Patent Document 3, for example). To improve the cycle characteristics, a negative electrode is formed so that a silicon active material contains oxygen, an average oxygen content is 40 at% or less, and an oxygen content becomes large near a current collector (see Patent Document 4, for example).

To improve first charge-discharge efficiency, a nanocomposite containing a Si phase, $SiO_2$, and an $M_yO$ metal oxide is used (see Patent Document 5, for example). To improve the cycle characteristics, $SiO_x$ ($0.8 \leq x \leq 1.5$, particle diameter range = 1 um to 50 um) and a carbon material are mixed and calcined at high temperature (see Patent Document 6, for example). To improve the cycle characteristics, a mole ratio of oxygen to silicon in a negative electrode active material is set to 0.1 to 1.2 to control the active material within a range that a difference between a maximum value and a minimum value of the mole ratio near an interface between the active material and a current collector is 0.4 or less (see Patent Document 7, for example). To improve battery load characteristics, a metal oxide containing lithium is used (see Patent Document 8, for example). To improve the cycle characteristics, a hydrophobic layer such as a silane compound is formed on a surface layer of a silicon material (see Patent Document 9, for example). To improve the cycle characteristics, silicon oxide is used, and a graphite coating is formed on a surface layer of the silicon oxide to impart conductivity (see Patent Document 10, for example). In Patent Document 10, shift values obtained from a RAMAN spectrum on the graphite coating are as follows: broad peaks appear at 1330 cm$^{-1}$ and 1580 cm$^{-1}$; and an intensity ratio thereof $I_{1330}/I_{1580}$ satisfies 1.5 < $I_{1330}/I_{1580}$ < 3. To achieve a high battery capacity and to improve the cycle characteristics, particles having a silicon fine crystal phase dispersed in silicon dioxide are used (see Patent Document 11, for example). To improve overcharge and overdischarge characteristics, an oxide of silicon with regulated atom number ratio between silicon and oxygen of 1 : y (0 < y < 2) is used (see Patent Document 12, for example).

As a lithium-ion secondary battery using an oxide of silicon, Hitachi Maxell, Ltd. started to ship rectangular secondary batteries adopting a nano-silicon composite for smartphones in June, 2010 (see Non Patent Document 1, for example). An oxide of silicon proposed by Hohl is a composite material of $Si^{0+}$ to $Si^{4+}$, which has various oxidation states (see Non Patent Document 2). Kapaklis proposes a disproportionation structure in which a thermal load is applied to an oxide of silicon to cause separation into Si and $SiO_2$ (see Non Patent Document 3). Among oxides of silicon having the disproportionation structure, Miyachi, et al. focus on Si and $SiO_2$ that contribute to charge-and-discharge (see Non Patent Document 4), and Yamada, et al. propose a reaction formula between the oxide of silicon and Li as follows (see Non Patent Document 5).

$$2SiO(Si+SiO_2) + 6.85Li^+ + 6.85e^- \rightarrow 1.4Li_{3.75}Si + 0.4Li_4SiO_4 + 0.2SiO_2$$

The reaction formula indicates that Si and $SiO_2$ constituting the oxide of silicon react with Li, and are separated into Li silicide, Li silicate, and partially unreacted $SiO_2$.

The Li silicate generated here is regarded to be irreversible and a stable substance that releases no Li after formed once. A capacity per mass calculated from this reaction formula is near an experimental value, and this reaction formula is recognized as a reaction mechanism of the oxide of silicon. Kim, et al. have identified the Li silicate, the irreversible component of the oxide of silicon with charge-and-discharge, as $Li_4SiO_4$ by using $^7Li$-MAS-NMR and $^{29}Si$-MAS-NMR (see Non Patent Document 6).

This irreversible capacity is most disadvantageous for the oxide of silicon, which is required to be improved. Accordingly, Kim, et al. use a Li pre-doping method in which the Li silicate is formed in advance to produce a negative electrode having remarkably improved first efficiency as a battery and being durable for practical use (see Non Patent Document 7).

A method in which the electrode is not doped with Li but a powder is treated is also proposed. This method achieves improvement of the irreversible capacity (see Patent Document 13).

CITATION LIST

PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A
Patent Document 13: JP 2015-156355 A

NON PATENT LITERATURE

Non Patent Document 1: Battery Association of Japan, Newsletter "Denchi (battery)", May 1, 2010, p. 10.
Non Patent Document 2: A. Hohl, T. Wieder, P. A. van Aken, T. E. Weirich, G. Denninger, M. Vidal, S. Oswald, C. Deneke, J. Mayer, and H. Fuess, J. Non-Cryst. Solids, 320, (2003), 255.
Non Patent Document 3: V. Kapaklis, J. Non-Crystalline Solids, 354 (2008) 612.

Non Patent Document 4: Mariko Miyachi, Hironori Yamamoto, and Hidemasa Kawai, J. Electrochem. Soc. 2007, volume 154, issue 4, A376-A380.

Non Patent Document 5: M. Yamada, A. Inaba, A. Ueda, K. Matsumoto, T. Iwasaki, T. Ohzuku, J. Electrochem. Soc., 159, A1630 (2012).

Non Patent Document 6: Taeahn Kim, Sangjin Park, and Seung M. Oh, J. Electrochem. Soc. volume 154, (2007), A1112-A1117.

Non Patent Document 7: Hye Jin Kim, Sunghun Choi, Seung Jong Lee, Myung Won Seo, Jae Goo Lee, Erhan Deniz, Yong Ju Lee, Eun Kyung Kim, and Jang Wook Choi,. Nano Lett. 2016, 16, 282-288.

## SUMMARY OF INVENTION

### TECHNICAL PROBLEM

As noted above, the small-sized electronic devices represented by mobile terminals have had higher performance and more functions in recent years, and the lithium-ion secondary battery, which is a main power source therefor, has required to increase the battery capacity. As a solution for this problem, there has been a demand for development of a lithium-ion secondary battery composed of a negative electrode using a silicon material as a main material. The lithium-ion secondary battery using the silicon material is desired to have initial charge-discharge characteristics and cycle characteristics comparable to those of a lithium-ion secondary battery using a carbon-based active material. Accordingly, the cycle characteristics and the initial charge-and-discharge characteristics have been improved by using an oxide of silicon (doped with Li) modified by insertion of Li and partial release of inserted Li as a negative electrode active material. However, when the Li-inserted negative electrode material is used for preparing a slurry in an electrode forming step, a part of the Li component of the Li-inserted negative electrode material is eluted into a slurry and thereby various problems occur such as decrease in a viscosity of a binder (thickener).

The present invention has been made in view of the above problems. An object of the present invention is to provide: a negative electrode active material that can achieve the sufficient battery cycle characteristics and increase the stability in slurry formation; and a negative electrode containing such a negative electrode active material.

### SOLUTION TO PROBLEM

To achieve the above object, the present invention provides a negative electrode active material comprising negative electrode active material particles, wherein

the negative electrode active material particles contain silicon oxide particles coated with a carbon layer,

at least a part of the silicon oxide particles contains at least one selected from the group consisting of $Li_2SiO_3$, $Li_4SiO_4$, and $Li_6Si_2O_7$, and

a part of at least an outermost layer of the negative electrode active material particles is coated with a layer of a plasticizer.

The negative electrode active material according to the present invention contains the negative electrode active material particles containing the silicon oxide particles, and thereby the battery capacity can be increased.

In the negative electrode active material according to the present invention, at least a part of the silicon oxide particles contains at least one selected from the group consisting of $Li_2SiO_3$, $Li_4SiO_4$, and $Li_6Si_2O_7$, and a part of at least an outermost layer of the negative electrode active material particles is coated with a layer of a plasticizer. By virtue of this configuration, excellent Li diffusibility in bulk can be achieved while remarkably improving water resistance. By virtue of the increase in the Li diffusibility, the battery cycle characteristics can be improved.

As these results, the negative electrode active material of the present invention can increase the stability in slurry formation while achieving sufficient battery cycle characteristics.

The layer of the plasticizer preferably has a thickness of 0.1 nm or more and 10 nm or less.

When the layer of the plasticizer has the thickness within this range, the film thickness can be easily regulated, and sufficient Li permeability can be exhibited.

A part of the carbon layer preferably contains a nitrogen atom.

Such a carbon layer can exhibit excellent stability and excellent Li permeability.

In this case, the carbon layer may be formed with a hydrocarbon material derived from petroleum asphalt as a starting material, and a part thereof may contain the nitrogen atom.

The carbon layer may be formed with a hydrocarbon material derived from petroleum asphalt as a starting material.

The plasticizer desirably contains at least one selected from the group consisting of a phthalate ester plasticizer, an adipate ester plasticizer, a phosphate ester plasticizer, and a sulfonamide plasticizer.

The outermost surface coated with the layer containing such a plasticizer can more certainly exhibit the excellent water resistance.

The plasticizer more desirably contains at least one selected from the group consisting of dioctyl phthalate, dibutoxyethyl phthalate, diisononyl phthalate, diisodecyl phthalate, diundecyl phthalate, bis(2-ethylhexyl) adipate, diisononyl adipate, diisodecyl adipate, bis(2-butoxyethyl) adipate, triphenyl phosphate, a phthalate-based polyester, an adipate-based polyester, an epoxidated vegetable oil, p-toluenesulfonamide, N-ethyl-o-toluenesulfonamide, N-ethyl-p-toluenesulfonamide, o-toluenesulfonamide, p-toluenesulfonamide, N-n-butylbenzenesulfonamide, and N-cyclohexyl-p-toluenesulfonamide.

The outermost surface coated with the layer containing such a plasticizer can furthermore certainly exhibit the excellent water resistance.

The layer of the plasticizer preferably further comprises a solid electrolyte.

The layer of the plasticizer further comprising the solid electrolyte can yield the negative electrode active material exhibiting more excellent Li diffusibility.

In this case, the solid electrolyte may contain lithium phosphate and/or aluminum oxide.

For example, the solid electrolyte can contain lithium phosphate and/or aluminum oxide.

The negative electrode active material particles before charge-and-discharge preferably have a peak derived from a Si (111) crystal face obtained by X-ray diffraction using Cu-K$\alpha$ radiation, a crystallite size corresponding to the crystal face is preferably 5.0 nm or less, and a ratio A/B of an intensity A of the peak derived from the Si (111) face relative to an intensity B of a peak derived from a $Li_2SiO_3$ (111) crystal face preferably satisfy the following formula (1),

$$0.4 \leq A/B \leq 1.0 \quad ...(1).$$

The negative electrode active material containing such negative electrode active material particles can achieve the high battery capacity while reducing the irreversible capacity.

The negative electrode active material particles preferably have a median diameter of 4.5 um or more and 15 um or less.

When the median diameter of the negative electrode active material particles within this range, promotion of the reaction with the electrolyte liquid can be prevented and failure of electron contacting due to the expansion of the active material with charge-and-discharge can be prevented.

The present invention also provides a negative electrode comprising the negative electrode active material according to the present invention.

The negative electrode according to the present invention comprises the negative electrode active material of the present invention, and thereby the sufficient battery cycle characteristics can be achieved.

ADVANTAGEOUS EFFECTS OF INVENTION

As noted above, according to the negative electrode active material of the present invention, the stability in slurry formation can be increased while achieving the sufficient battery cycle characteristics.

Furthermore, according to the negative electrode of the present invention, sufficient battery cycle characteristics can be achieved.

BRIEF DESCRIPTION OF DRAWINGS

FIG. 1 is a schematic sectional view illustrating an example of structure of a negative electrode of the present invention;

FIG. 2 is an exploded view illustrating a structure example (laminate film type) of a lithium-ion secondary battery containing a negative electrode of the present invention;

FIG. 3 is an X-ray photoelectron spectrum of a surface of a negative electrode active material of Example 1; and

FIG. 4 is a TOF-SIMS spectrum of the surface of the negative electrode active material of Example 1.

DESCRIPTION OF EMBODIMENTS

As one technique to increase the battery capacity of the lithium-ion secondary battery, it has been investigated to use a negative electrode including an oxide of silicon as a main material as a negative electrode of the lithium-ion secondary battery, as noted above. This lithium-ion secondary battery using the oxide of silicon is desired to have initial charge-and-discharge characteristics comparable to those of a lithium-ion secondary battery using a carbon-based active material. In addition, Li-doped SiO that can improve the initial charge-and-discharge characteristics is desired to have cycle characteristics comparable to those of the carbon-based active material. However, the negative electrode active material that can satisfy a pot-life of a slurry in slurry formation has not been proposed.

The present inventors have made earnest study to obtain a negative electrode active material that exhibits excellent operability and that can yield high cycle characteristics when used as a negative electrode active material of a secondary battery. As a result, the present inventors have found that water resistance can be remarkably improved and excellent Li diffusibility in bulk can be obtained by retaining a Li silicate phase obtained by Li-doping an oxide of silicon in at least one state selected from the group of $Li_2SiO_3$, $Li_4SiO_4$, and $Li_6Si_2O_7$, which inhibits generation of $Li_2Si_2O_5$ with little elution property and which is easily eluted into water but has high Li diffusibility, and by coating the outermost layer of the negative electrode active material with a layer of a plasticizer. This finding has led to completion of the present invention.

Specifically, the present invention is a negative electrode active material comprising negative electrode active material particles, wherein

the negative electrode active material particles contain silicon oxide particles coated with a carbon layer,
at least a part of the silicon oxide particles contains at least one selected from the group consisting of $Li_2SiO_3$, $Li_4SiO_4$, and $Li_6Si_2O_7$, and
a part of at least an outermost layer of the negative electrode active material particles is coated with a layer of a plasticizer.

The present invention also provides a negative electrode comprising the negative electrode active material of the present invention.

Hereinafter, the present invention will be described in detail, but the present invention is not limited thereto.

[Negative Electrode Active Material]

The negative electrode active material of the present invention (hereinafter, which is also referred to as "silicon-based negative electrode active material") contains the negative electrode active material particles containing the silicon oxide particles (hereinafter, which is also referred to as "silicon-based negative electrode active material particles"), and therefore the battery capacity can be increased.

In addition, by virtue of forming the Li silicate in at least a part of the silicon oxide particles, a slurry can be stabilized before applying. By use of this stable slurry, a good electrode can be obtained, and the battery characteristics can be improved. However, it has been found that such a slurry has insufficient long-term storability, and the formed Li silicate is gradually dissolved in the slurry with time.

In forming the Li silicate, the crystal phase of the Li silicate can be enlarged by, for example, applying thermal load to reduce the elution of the Li content into the slurry, but the Si crystallinity also simultaneously increases. The generation of such highly crystalline Si is a factor of considerably deteriorating the battery performance.

In addition, enlarging the Li silicate phase considerably decreases the Li diffusibility to deteriorate the battery performance.

Accordingly, when the crystal phase of the Li silicate is set as small as possible to inhibit crystallization of Si and the enlargement of the Li silicate phase, the Li silicate phase that is gradually eluted into water is generated.

As a result, sufficient results on the battery performance can be obtained but a long leaving time in the electrode forming step, specifically a slurry production, deteriorates the binder to deteriorate the battery performance, and thereby the slurry is necessarily quickly applied after the slurry formation.

Accordingly, the present inventors have developed a material that can yield excellent Li diffusibility in bulk while remarkably improving the water resistance, by virtue of retaining the Li silicate phase in at least one state selected from the group of $Li_2SiO_3$, $Li_4SiO_4$, and $Li_6Si_2O_7$ and by virtue of coating the outermost layer of the negative electrode active material with a layer of a plasticizer.

In the negative electrode active material of the present invention, at least a part of the silicon oxide particles contains at least one selected from the group consisting of $Li_2SiO_3$, $Li_4SiO_4$, and $Li_6Si_2O_7$, and a part of at least an outermost layer of the negative electrode active material particles is coated with a layer of a plasticizer. By virtue of this configuration, excellent Li diffusibility in bulk can be achieved while remarkably improving water resistance. The increase in the Li diffusibility can improve the battery cycle characteristics.

Therefore, the negative electrode active material of the present invention can achieve sufficient battery cycle characteristics and increase the stability in slurry formation.

Hereinafter, the negative electrode active material of the present invention will be described in more detail.

The negative electrode active material of the present invention can be used as, for example, a negative electrode active material for a non-aqueous electrolyte secondary battery, specifically for a lithium-ion secondary battery.

The negative electrode active material of the present invention contains silicon oxide particles. The silicon oxide particles may refer to a silicon oxide material containing a silicon compound containing oxygen. A ratio between silicon and oxygen to constitute this silicon oxide is preferably within a range of $SiO_x$: $0.8 \leq x \leq 1.2$. "x" of 0.8 or more, which indicates an increased oxygen ratio compared with a silicon single substance, yields good cycle characteristics. "x" of 1.2 or less is preferable because resistance of the oxide of silicon becomes not excessively high. Among these, the composition of $SiO_x$ having "x" of closer to 1 is preferable. This is because high cycle characteristics are obtained. The composition of the silicon oxide particles in the present invention does not necessarily means a purity of 100%, and the silicon oxide particles may contain a trace amount of impurity elements.

In the negative electrode active material of the present invention, at least a part of the silicon oxide particles contains a Li compound, specifically at least one selected from the group consisting of $Li_2SiO_3$, $Li_4SiO_4$, and $Li_6Si_2O_7$. More specifically, the silicon oxide particles preferably contain $Li_2SiO_3$. In the oxide of silicon in such a material, a $SiO_2$ component part destabilized in insertion and release of lithium during charge-and-discharge of the battery is modified in advance to the other lithium silicate, and thereby the irreversible capacity generated in charge can be reduced. In addition, by virtue of enlargement of the Li silicate within a range such that the crystal growth of Si is inhibited, the irreversible capacity with charge-and-discharge can be reduced. Therefore, among the Li silicates generated in bulk, $Li_2SiO_3$ desirably has crystallinity.

Note that in the case of excessive enlargement, the material does not contribute to charge-and-discharge. Therefore, there is an optimal range.

Since $Li_4SiO_4$ and $Li_6Si_2O_7$ have a large degree of elution into water in slurry formation, these silicates are more unstable than $Li_2SiO_3$ but can be handled by improving water resistance using a plasticizer described below.

In this case, $Li_4SiO_4$ exhibits the best Li diffusibility, and desirably used in combination with $Li_2SiO_3$ substantially having high structural stability.

The Li silicates contained inside bulk of the silicon oxide particles, such as $Li_2SiO_3$, $Li_4SiO_4$, and $Li_6Si_2O_7$, can be quantified by nuclear magnetic resonance (NMR). The NMR measurement can be performed under the following conditions, for example. $^{29}Si$-MAS-NMR (magic angle spinning nuclear magnetic resonance)

- Apparatus: 700 NMR spectrometer manufactured by Bruker
- Probe: 4 mm HR-MAS rotor, 50 $\mu L$
- Sample rotation rate: 10 kHz
- Measurement environment temperature: 25°C

The degree of enlargement of the Li silicates and the degree of crystallization of Si can be checked by X-ray diffraction (XRD). As the X-ray diffraction apparatus, D8 ADVANCE, manufactured by Bruker, may be used. For example, the measurement is performed from 10° to 40° with X-ray source: Cu $K\alpha$ radiation, using a Ni filter, output: 40 kV / 40 mA, slit width: 0.3°, step width: 0.008°, counting time per step: 15 seconds.

The negative electrode active material particles contained in the negative electrode active material of the present invention before charge-and-discharge preferably have a peak derived from a Si (111) crystal face obtained by X-ray diffraction using Cu-$K\alpha$ radiation, a crystallite size corresponding to the crystal face is preferably 5.0 nm or less, and a ratio A/B of an intensity A of the peak derived from the Si (111) face relative to an intensity B of a peak derived from a $Li_2SiO_3$ (111) crystal face preferably satisfies the following formula (1),

$$0.4 \leq A/B \leq 1.0 \quad ...(1).$$

The negative electrode active material containing such negative electrode active material particles can achieve the high battery capacity while reducing the irreversible capacity. The crystallite size of Si (111) is ideally 0 nm.

In the negative electrode active material of the present invention, the silicon oxide particles are coated with a carbon layer. Thus, the battery capacity and safety can be improved.

The carbon coating the silicon oxide particles is typically derived from a hydrocarbon gas and formed by using CVD, and by mixing the silicon oxide particles and an asphalt component (a hydrocarbon material derived from petroleum asphalt) and performing a thermal treatment, a nitrogen atom (N) can be contained. The carbon layer derived from asphalt has a molecular structure with a large number of carbon atoms. The presence of such a carbon layer can improve the water resistance in slurry formation. The molecular structure with a large number of carbon atoms exhibits features close to pitch coat, which inhibits excessive decomposition of the electrolyte liquid, and thereby a decomposed product of the electrolyte liquid is hardly generated excessively on the surface, resulting in formation of the coating having excellent Li permeability. As a result, the carbon layer with higher stability and excellent Li permeability can be obtained.

In addition, in the negative electrode active material of the present invention, at least a part of the outermost surface of the negative electrode active material particles is coated with a layer of a plasticizer.

The layer of the plasticizer preferably has a thickness of 0.1 nm or more and 10 nm or less.

When the layer of the plasticizer has a thickness within this range, the film thickness is easily regulated, and the layer can exhibit sufficient Li permeability.

The plasticizer desirably contains at least one selected from the group consisting of a phthalate ester plasticizer, an adipate ester plasticizer, a phosphate ester plasticizer, and a sulfonamide plasticizer.

By virtue of having the outermost layer coated with the layer containing such a plasticizer, the excellent water resistance can by more certainly exhibited.

In addition, the plasticizer may contain a sebacate ester plasticizer, a glycol ester plasticizer, or an epoxy fatty acid ester plasticizer.

The plasticizer more desirably contains substantially at least one selected from the group consisting of dioctyl phthalate, dibutoxyethyl phthalate, diisononyl phthalate, diisodecyl phthalate, diundecyl phthalate, bis(2-ethylhexyl) adipate, diisononyl adipate, diisodecyl adipate, bis(2-butoxyethyl) adipate, triphenyl phosphate, a phthalate-based polyester, an adipate-based polyester, an epoxidated vegetable oil, p-toluenesulfonamide, N-ethyl-o-toluenesulfonamide, N-ethyl-p-toluenesulfonamide, o-toluenesulfonamide, p-toluenesulfonamide, N-n-butylbenzenesulfonamide, and N-cyclohexyl-p-toluenesulfonamide.

The outermost layer coated with the layer containing such a plasticizer can further certainly exhibit the excellent water resistance.

The outermost surface layer of the plasticizer can be confirmed by X-ray photoelectron spectroscopy (XPS) and/or time-of-flight secondary-ion mass spectrometry (TOF-SIMS).

The XPS may be performed by using, for example, PHI Quantera II, manufactured by ULVAC-PHI, INCORPORATED. The beam diameter of X-ray may be 100 um in diameter, and a neutralization gun may be used.

The TOF-SIMS may be performed by using TOF-SIMS5, manufactured by ION-TOF GmbH, for example. An example of the conditions is described below.

Mass range (m/z): 0 to 1500
Raster size: 300 um in square
Number of scanning: 16
Number of pixels: 256
Vacuum degree: $4 \times 10^{-7}$ Pa or less
Primary ion species: $Bi_3^{++}$
Acceleration voltage: 30 kV
Pulse width: 12.5 ns
High-mass resolution measurement: present
Charge neutralization: absent
Post acceleration: 9.5 kV

The battery is disassembled in an Ar atmosphere, and measured without air open.

Since the plasticizer is an insulative material, a crushed product of a solid electrolyte is more preferably mixed with the layer of the plasticizer in coating with the layer of the plasticizer.

The material of the solid electrolyte is not particularly limited, but lithium phosphate, aluminum oxide having Li permeability, etc. are desirable.

The negative electrode active material particles preferably have a median diameter of 4.5 um or more and 15 um or less.

When the median diameter of the negative electrode active material particles is within this range, promotion of the reaction with the electrolyte liquid can be prevented and, in addition, failure of electron contacting due to the expansion of the active material with charge-and-discharge can be prevented.

[Method for Manufacturing Negative Electrode Active Material]

The negative electrode active material of the present invention can be manufactured by the following method, for example. However, the negative electrode active material of the present invention may be manufactured by a method other than the method described below.

First, the silicon oxide particles containing the silicon compound containing oxygen are manufactured. Described hereinafter is a case where silicon oxide represented by $SiO_x$ ($0.8 \leq x \leq 1.2$) is used as the silicon compound containing oxygen. First, a raw material to generate silicon oxide gas is heated in the presence of an inert gas and under a reduced pressure within a temperature range of 900°C to 1600°C to generate silicon oxide gas. In this time, the used raw material may be a mixture of a metal silicon powder and a silicon dioxide powder. With considering presence of oxygen on a surface of the metal silicon powder and trace oxygen in the reaction furnace, it is desirable that the mixing mole ratio is within a range of 0.9 < the metal silicon powder / the silicon dioxide powder < 1.2.

The generated silicon oxide gas is solidified and deposited on an absorbent plate. Then, the deposited product of the silicon oxide is taken out in a state where a temperature in the reaction furnace is lowered to 100°C or lower, and crushed and powdered by using a ball mill, a jet mill, etc. In this manner, the silicon oxide particles can be produced. Si crystallites in the silicon oxide particles can be regulated by changing the gasifying temperature of the raw material to generate the silicon oxide gas, or by performing a thermal treatment after generation of the silicon compound particles.

Then, the layer of the carbon material is generated on the surface layer of the silicon oxide particles.

Methods for generating the carbon material layer can include a pyrolytic CVD method. An example of the method for generating the carbon material layer by the pyrolytic CVD method will be described below.

The silicon oxide particles are set in a furnace. Then, a hydrocarbon gas is introduced into the furnace, and a temperature in the furnace is raised. The decomposition temperature is not particularly limited, but desirably 950°C or lower, and more desirably 850°C or lower. Setting the decomposition temperature to 950°C or lower enables to inhibit unintended disproportionation of the active material particles. The temperature in the furnace is raised to the predetermined temperature, and then the carbon layer is generated on the surfaces of the silicon compound particles. The hydrocarbon gas to be the raw material of the carbon material is not particularly limited, but desirably has $C_nH_m$ composition wherein $n \leq 3$. The composition of $n \leq 3$ can reduce a manufacturing cost, and can yield good physical properties of the decomposed product.

The carbon coating the silicon oxide particles is typically derived from the hydrocarbon gas and formed by using the CVD method as described above. Meanwhile, by virtue of kneading the silicon oxide particles with an asphalt component (hydrocarbon material derived from petroleum asphalt) and performing a thermal treatment at, for example, 850°C to 900°C, a nitrogen atom (N) is to be contained, and the carbon layer having higher stability and excellent Li permeability can be obtained.

Then, Li is inserted into the silicon oxide particles (silicon oxide particles coated with the carbon layer) produced as above. This Li insertion produces negative electrode active material particles containing silicon oxide particles with inserted Li. That is, this Li insertion modifies the silicon oxide particles coated with the carbon layer to generate a Li compound inside the silicon oxide particles. Li is preferably inserted by an oxidation-reduction method.

As the modification by the oxidation-reduction method, for example, the silicon oxide particles coated with the carbon layer can be firstly immersed in a solution A in which lithium is dissolved in an ether solvent to insert lithium. This solution A may further contain a polycyclic aromatic compound or a linear polyphenylene compound. After the insertion of lithium, the silicon active material particles coated with the carbon layer are immersed in a solution B containing a polycyclic aromatic compound or a derivative thereof to release active lithium from the silicon oxide particles coated with the carbon layer. As the solvent of this solution B, an ether solvent, a ketone solvent, an ester solvent, an alcohol solvent, an amine solvent, or a mixed solvent thereof may be used, for example. Alternatively, after the immersion in the solution A, the obtained silicon oxide particles coated with the carbon layer may be subjected to a thermal treatment under an inert gas. The thermal treatment can stabilize the Li compound. Thereafter, the silicon oxide particles coated with the carbon layer may be washed by a washing method with an alcohol, alkaline water dissolving lithium carbonate, a weak acid, pure water, etc.

As the ether solvent used for the solution A, diethyl ether, tert-butyl methyl ether, tetrahydrofuran, dioxane, 1,2-dimethoxyethane, diethylene glycol dimethyl ether, triethylene glycol dimethyl ether, tetraethylene glycol dimethyl ether, a mixed solvent thereof, etc. may be used. Among these, tetrahydrofuran, dioxane, or 1,2-dimethoxyethane is particularly preferably used. These solvents are preferably dehydrated, and preferably deoxygenated.

As the polycyclic aromatic compound contained in the solution A, one or more of naphthalene, anthracene, phenanthrene, naphthacene, pentacene, pyrene, picene, triphenylene, coronene, chrysene, and a derivative thereof may be used. As the liner polyphenylene compound, one or more of biphenyl, terphenyl, and a derivative thereof may be used.

As the polycyclic aromatic compound contained in the solution B, one or more of naphthalene, anthracene, phenanthrene, naphthacene, pentacene, pyrene, picene, triphenylene, coronene, chrysene, and a derivative thereof may be used.

As the ether solvent for the solution B, diethyl ether, tert-butyl methyl ether, tetrahydrofuran, dioxane, 1,2-dimethoxyethane, diethylene glycol dimethyl ether, triethylene glycol dimethyl ether, tetraethylene glycol dimethyl ether, etc. may be used.

As the ketone solvent, acetone, acetophenone, etc. may be used.

As the ester solvent, methyl formate, methyl acetate, ethyl acetate, propyl acetate, isopropyl acetate, etc. may be used.

As the alcohol solvent, methanol, ethanol, propanol, isopropyl alcohol, etc. may be used.

As the amine solvent, methylamine, ethylamine, ethylenediamine, etc. may be used.

The Li silicate generated by modification according to the oxidation-reduction method is $Li_4SiO_4$, and can be converted into the other Li silicates, such as $Li_2SiO_3$, by a thermal treatment. A crystallization degree of the Li silicate and Si varies depending on the temperature in this time. In addition, the reaction temperature in the Li insertion also relates to the crystallization degree.

The material subjected to the Li-doping treatment by the oxidation-reduction method can be subjected to a thermal treatment at 400°C or higher and 650°C or lower after filtering to control a state of the Li silicate.

In this time, it is important to perform the thermal treatment in a vacuum state or under an inert gas.

As for a thermal treatment apparatus, although the apparatus is not limited, a uniform thermal treatment, such as a rotary kiln, is desirably used.

In this time, various state of the Li silicate can be created with factors of the vacuum state, a flow rate (internal pressure) of the inert gas, a retort thickness, and a number of rotation.

Enlargement of silicon and an amorphous property of silicon can also be similarly controlled.

Then, at least a part of the outermost surface of the silicon oxide particles subjected to the Li-doping treatment is coated with the layer of the plasticizer.

The coating method here is not particularly limited, but the coating can be performed by the following method, for example.

The plasticizer is dissolved into a solvent that can be used as the solvent of the solution A, such as diethyl ether, to obtain a plasticizer solution. Then, the particles obtained by the Li-doping treatment is mixed with the solution dissolving the plasticizer, and the solvent is subsequently evaporated by using dry-spraying to form the layer of the plasticizer on the particle surface. Thereafter, vacuum drying is performed to completely remove the solvent. In this manner, the negative electrode active material of the present invention can be obtained.

[Negative Electrode]

The negative electrode of the present invention comprises the negative electrode active material of the present invention.

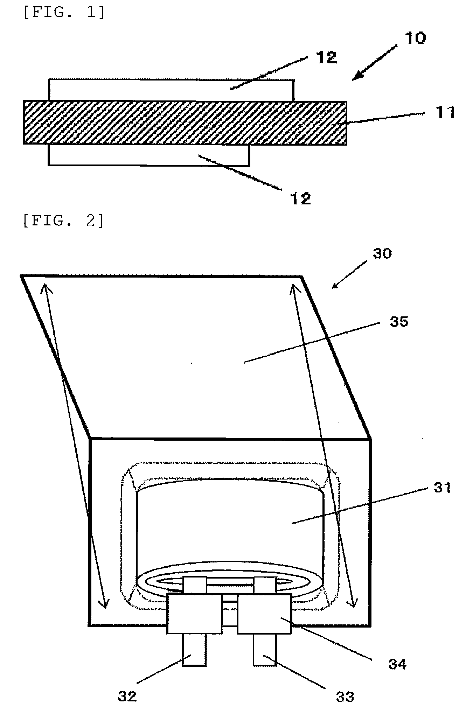

Subsequently, the structure of the negative electrode of the present invention will be described with an example. FIG. 1 illustrates a schematic sectional view of an example of the negative electrode of the present invention. As illustrated in FIG. 1, a negative electrode 10 has a structure having a negative electrode active material layer 12 on a negative electrode current collector 11. This negative electrode active material layer 12 may be provided on both surfaces of the negative electrode current collector 11 as illustrated in FIG. 1, or may be provided on only one surface. Furthermore, the negative electrode of the present invention may not have the negative electrode current collector 11.

Each member will be described hereinafter.

[Negative Electrode Current Collector]

The negative electrode current collector 11 is composed of a material having excellent conductivity and being superior in mechanical strength. Examples of the conductive material usable for the negative electrode current collector 11 include copper (Cu) and nickel (Ni). This conductive material is preferably a material that does not form an intermetallic compound with lithium (Li).

The negative electrode current collector 11 preferably contains carbon (C) and sulfur (S) in addition to the main elements. This is because physical strength of the negative electrode current collector 11 is improved. Particularly, when an active material layer expanding during charge is contained, the current collector containing the above element exhibits an effect of inhibiting deformation of the electrode having the current collector. A content of the above contained elements is not particularly limited, but preferably each 100 mass-ppm or less. This is because a higher effect of inhibiting the deformation can be obtained.

A surface of the negative electrode current collector 11 may be roughened, or may not be roughened. Examples of the roughened negative electrode current collector include a metal foil subjected to an electrolytic treatment, an emboss treatment, or a chemical etching treatment. Examples of the unroughened negative electrode current collector include a rolled metal foil.

[Negative Electrode Active Material Layer]

The negative electrode active material layer 12 contains the negative electrode active material according to the present invention, which can occlude and release lithium ions. The negative electrode active material layer 12 may further contain other materials such as a negative electrode binding agent (binder) and a conductive auxiliary from the viewpoint of battery design. The negative electrode active material contains negative electrode active material particles, and the negative electrode active material particles contain silicon oxide particles coated with the carbon layer.

Alternatively, the negative electrode active material layer 12 may contain a mixed material of the negative electrode active material containing the negative electrode active material of the present invention (the silicon-based negative electrode active material) and a carbon-based active material. This mixed material reduces electric resistance of the negative electrode active material layer, and can relax expansion stress with charge. Examples of the usable carbon-based active material include pyrolytic carbons, cokes, glass-like carbon fibers, organic polymer compound calcined products, and carbon blacks.

As the negative electrode binding agent contained in the negative electrode active material layer 12, any one or more of polymer materials, synthetic rubbers, etc. may be used, for example. Examples of the polymer material include polyvinylidene fluoride, a polyimide, a polyamideimide, an aramid, polyacrylic acid, lithium polyacrylate, sodium polyacrylate, and carboxymethylcellulose. Examples of the synthetic rubber include a styrene-butadiene-based rubber, a fluorine-based rubber, and ethylene-propylene-diene.

As the negative electrode conductive auxiliary, any one or more of carbon materials such as carbon black, acetylene black, graphite, Ketjenblack, carbon nanotube, and carbon nanofiber may be used, for example.

The negative electrode active material layer 12 is formed by an application method, for example. The application method is a method in which the silicon-based negative electrode active material, the above binding agent, etc., and as necessary, the conductive auxiliary and the carbon-based active material are mixed, and then the mixture is dispersed in an organic solvent, water, etc. and applied.

The specific example is as below. The negative electrode active material of the present invention produced as described above is mixed with other materials such as the negative electrode binding agent and the conductive auxiliary to form a negative electrode mixture, and then an organic solvent, water, etc. is added to prepare a slurry. Thereafter, the slurry is applied on a surface of a negative electrode current collector, and dried to form a negative electrode active material layer. In this time, heating pressing may be performed as necessary. Thus, the negative electrode of the present invention can be produced.

Although the negative electrode active material of the present invention is particularly suitable for forming the slurry by using water, the negative electrode active material may be applied for forming the slurry by using an organic solvent.

<Lithium-Ion Secondary Battery>

The negative electrode of the present invention can be used as a negative electrode of a non-aqueous electrolyte secondary battery, for example, a lithium-ion secondary battery.

Next, an example of a laminated film-type lithium-ion secondary battery will be described as a specific example of the non-aqueous electrolyte secondary battery for which the negative electrode of the present invention can be used.

[Structure of Laminated Film-Type Secondary Battery]

In a laminated film-type lithium-ion secondary battery 30 illustrated in FIG. 2, a wound electrode assembly 31 is housed inside an exterior member 35 mainly having a sheet shape. This wound electrode assembly 31 has a separator between a positive electrode and a negative electrode that are wound. Alternately, a stack having a separator between a positive electrode and a negative electrode may be housed without winding in some cases. In any of the electrode assemblies, a positive electrode lead 32 is attached to the positive electrode, and a negative electrode lead 33 is attached to the negative electrode. An outermost periphery of the electrode assembly 31 is protected with a protective tape.

The positive lead 32 and the negative electrode lead 33 are drawn out in one direction from an inside to outside of the exterior member 35, for example. The positive electrode lead 32 is formed with a conductive material such as, for example, aluminum. The negative electrode lead 33 is formed with a conductive material such as, for example, nickel and copper.

The exterior member 35 is, for example, a laminated film in which a fusion layer, a metal layer, and a surface-protective layer are laminated in this order. Two of these laminated films are bonded to each other by fusion or an adhesive at outer peripheries of the fusion layers thereof so that each of the fusion layers is opposite to the electrode assembly 31. For example, the fused portion is a film of polyethylene, polypropylene, etc., and the metal portion is an aluminum foil, etc. The protective film is of, for example, nylon.

Between the exterior member 35 and each of the positive electrode lead 32 and the negative electrode lead 33, an adhesion film 34 is inserted in order to prevent penetration of outside air. A material thereof is, for example, polyethylene, polypropylene, or a polyolefin resin.

Each member will be described hereinafter.

[Positive Electrode]

The positive electrode has, for example, a positive electrode active material layer on both surfaces or one surface of a positive electrode current collector, similarly to the negative electrode 10 in FIG. 1.

The positive electrode current collector is formed with a conductive material such as, for example, aluminum.

The positive electrode active material layer contains any one or two or more of positive electrode materials (positive electrode active materials) that can occlude and release lithium ions, and may contain other materials such as a positive electrode binding agent, a positive electrode conductive auxiliary, and a dispersant according to design.

The positive electrode material is desirably a lithium-containing compound. Examples of this lithium-containing compound include a composite oxide composed of lithium and a transition metal element, or a phosphate compound containing lithium and a transition metal element. Among these positive electrode materials, a compound containing at least one or more of nickel, iron, manganese, and cobalt is preferable. These compounds are represented by a chemical formula of $Li_xM1O_2$ or $Li_yM2PO_4$, for example. In the formulae, M1 and M2 represent at least one or more transition metal elements. The values of "x" and "y", which vary depending on a charge-discharge state of the battery, typically represent $0.05 \leq x \leq 1.10$ and $0.05 \leq y \leq 1.10$.

Examples of the composite oxide containing lithium and the transition metal element include lithium-cobalt composite oxide ($Li_xCoO_2$), lithium-nickel composite oxide ($Li_xNiO_2$), and lithium-nickel-cobalt composite oxide. Examples of the lithium-nickel-cobalt composite oxide include lithium-nickel-cobalt-aluminum composite oxide (NCA) and lithium-nickel-cobalt-manganese composite oxide (NCM).

Examples of the phosphate compound containing lithium and the transition metal element include lithium iron phosphate compound ($LiFePO_4$) or lithium iron manganese phosphate compound ($LiFe_{1-u}Mn_uPO_4$ $(0 < u < 1)$). By using these positive electrode materials, a high battery capacity and excellent cycle characteristics can be obtained.

As the positive electrode binding agent, any one or more of polymer materials, synthetic rubbers, etc. may be used, for example. Examples of the polymer material include polyvinylidene fluoride, a polyimide, a polyamideimide, an aramid, polyacrylic acid, lithium polyacrylate, sodium polyacrylate, and carboxymethylcellulose. Examples of the synthetic rubber include a styrene-butadiene-based rubber, a fluorine-based rubber, and ethylene-propylene-diene.

As the positive electrode conductive auxiliary, any one or more of carbon materials such as carbon black, acetylene black, graphite, Ketjenblack, carbon nanotube, and carbon nanofiber may be used, for example.

[Negative Electrode]

As the negative electrode of the secondary battery, the negative electrode of the present invention is used. The negative electrode constituting this secondary battery preferably has a large negative electrode charge capacity relative to an electric capacity (discharge capacity as the battery) obtained by the positive electrode active material. This configuration can inhibit precipitation of lithium metal on the negative electrode.

In this example, the positive electrode active material layers are provided on a part of each of both the surfaces of the positive electrode current collector, and similarly, the negative electrode active material layers of the present invention are also provided on a part of each of both the surfaces of the negative electrode current collector. In this case, on the negative electrode active material layer provided on the negative electrode current collector, a region where the opposite positive electrode active material layer is absent is preferably provided, for example. This is to design a stable battery.

The aforementioned region where the negative electrode active material layer and the positive electrode active material layer are not opposite is hardly affected by charge-and-discharge. Thus, a state of the negative electrode active material layer immediately after the formation is retained as it is. Accordingly, a composition of the negative electrode active material etc. can be accurately determined with good reproducibility independently on whether charge-and-discharge are performed.

[Separator]

The separator separates lithium metal or the positive electrode and the negative electrode, prevents current short circuit due to contacting of both the electrodes, and enables lithium ions to permeate. This separator is formed with a porous film composed of, for example, a synthetic resin or ceramic. The separator may have a laminated structure in which two or more types of the porous films are laminated. Examples of the synthetic resin include polytetrafluoroethylene, polypropylene, and polyethylene.

[Electrolyte Liquid]

At least a part of each of the positive electrode active material layer and the negative electrode active material layer or the separator is impregnated with a liquid electrolyte (electrolyte liquid). This electrolyte liquid has an electrolyte salt dissolved in a solvent, and may contain other materials such as additives.

As the solvent, a non-aqueous solvent can be used, for example. Examples of the non-aqueous solvent include ethylene carbonate, propylene carbonate, butylene carbonate, dimethyl carbonate, diethyl carbonate, ethyl methyl carbonate, methyl propyl carbonate, 1,2-dimethoxyethane, or tetrahydrofuran. Among these, at least one or more of ethylene carbonate, propylene carbonate, dimethyl carbonate, diethyl carbonate, and ethyl methyl carbonate are desirably used. This is because better characteristics can be obtained. In this case, a combination of: a solvent with high viscosity, such as ethylene carbonate and propylene carbonate; and a solvent with low viscosity, such as dimethyl carbonate, ethyl methyl carbonate, and diethyl carbonate can yield more advantageous characteristics. This is because dissociation ability and ion mobility of the electrolyte salt are improved.

When an alloy-type negative electrode is used, the solvent desirably contains at least one of a halogenated chain carbonate ester or a halogenated cyclic carbonate ester. This forms a stable coating on the surface of the negative electrode active material during charge-and-discharge, particularly during charge. Here, the halogenated chain carbonate ester refers to a chain carbonate ester having a halogen as a constituent element (at least one hydrogen is substituted with a halogen). The halogenated cyclic carbonate ester refers to a cyclic carbonate ester having a halogen as a constituent element (that is, at least one hydrogen is substituted with a halogen).

The type of halogen is not particularly limited, but preferably fluorine. This is because the coating with better quality is formed compared with other halogens. A larger number of the halogen is more desirable. This is because the obtained coating becomes more stable, and a decomposition reaction of the electrolyte liquid is reduced.

Examples of the halogenated chain carbonate ester include fluoromethyl methyl carbonate and difluoromethyl methyl carbonate. Examples of the halogenated cyclic carbonate ester include 4-fluoro-1,3-dioxolan-2-one and 4,5-difluoro-1,3-dioxolan-2-one.

The electrolyte liquid preferably contains an unsaturated carbon bond cyclic carbonate ester as the solvent additive. This is because a stable coating is formed on a surface of the negative electrode during charge-and-discharge to make the inhibition of the decomposition reaction of the electrolyte liquid possible. Examples of the unsaturated carbon bond cyclic carbonate ester include vinylene carbonate or vinylethylene carbonate.

The electrolyte liquid preferably contains a sultone (cyclic sulfonate ester) as the solvent additive. This is because chemical stability of the battery is improved. Examples of the sultone include propane sultone and propene sultone.

The solvent preferably contains an acid anhydride. This is because chemical stability of the electrolyte liquid is improved. Examples of the acid anhydride include propanedisulfonic anhydride.

The electrolyte salt may contain any one or more of a light metal salt such as a lithium salt, for example. Examples of the lithium salt include lithium hexafluorophosphate ($LiPF_6$) and lithium tetrafluoroborate ($LiBF_4$).

A content of the electrolyte salt is preferably 0.5 mol/kg or more and 2.5 mol/kg or less relative to the solvent. This is because high ion conductivity can be obtained.

[Method for Manufacturing Laminated Film-Type Secondary Battery]

The laminated film-type secondary battery described above can be manufactured by the following procedure, for example.

First, the positive electrode is manufactured by using the aforementioned positive electrode material. The positive electrode active material and, as necessary, the positive electrode binding agent, the positive electrode conductive auxiliary, etc. are firstly mixed to prepare a positive electrode mixture, and then the positive electrode mixture is dispersed in an organic solvent to prepare a positive electrode mixture slurry. Subsequently, the mixture slurry is applied on the positive electrode current collector with a coating apparatus, such as a knife roll or a die coater having a die head, and dried with hot blowing to obtain the positive electrode active material layer. Finally, the positive electrode active material layer is subjected to compressive formation with a roll-pressing machine, etc. In this time, heating may be performed and compressing may be repeated a plurality of times.

Then, by using the operation procedure same as the aforementioned production of the negative electrode 10, the negative electrode active material layer is formed on the negative electrode current collector to produce the negative electrode.

When the positive electrode and the negative electrode are produced, each of the active material layers is formed on both the surfaces of the positive and negative electrode current collectors. In this time, a length of the applied active material on both the surfaces may be shifted in both the electrodes (see FIG. 1).

Then, the electrolyte liquid is prepared. Subsequently, the positive electrode lead 32 is attached to the positive electrode current collector, and the negative electrode lead 33 is attached to the negative electrode current collector by ultrasonic welding, etc. Then, the positive electrode and the negative electrode are laminated via the separator and then wound to produce the wound electrode assembly 31, and a protective tape is bonded to the outermost periphery of the wound electrode assembly 31. Then, the wound electrode assembly 31 is molded so as to have a flat shape. Subsequently, the wound electrode assembly 31 is inserted into the folded film-shaped exterior member 35, thereafter insulating portions in the exterior member are bonded to each other by a thermal fusion method, and the wound electrode assembly 31 is enclosed in the exterior member in an open state in only one direction. Subsequently, the adhesion films 34 are inserted between: the positive electrode lead 32 and the exterior member 35; and the negative electrode lead 33 and the exterior member 35. Then, a predetermined amount of the electrolyte liquid prepared as above is fed through the opening, and vacuum impregnation is performed. After the impregnation, the opening is bonded by a vacuum thermal fusion method. Thus, the laminated film-type secondary battery 30 can be manufactured.

In the non-aqueous electrolyte secondary battery, such as the laminated film-type secondary battery 30 produced above, a negative electrode utilization rate during charge-and-discharge is preferably 93% or more and 99% or less. By virtue of setting the negative electrode utilization rate to be within a range of 93% or more, the first charge efficiency is not deteriorated, and the battery capacity can be increased. By virtue of setting the negative electrode utilization rate to be within a range of 99% or less, safety without precipitation of Li can be achieved.

EXAMPLES

Hereinafter, the present invention will be specifically described by using Examples and Comparative Examples, but the present invention is not limited thereto.

(Examples 1 to 3)

First, a negative electrode active material was produced as follows. A raw material obtained by mixing metal silicon and silicon dioxide was introduced in a reaction furnace. In this reaction furnace, the raw material was gasified under an atmosphere of a vacuum degree of 10 Pa and deposited on an absorbent plate. After sufficient cooling, the deposited product was taken out and crushed with a ball mill. A value of "x" of $SiO_x$ the silicon compound particles thus obtained was 1.0.

Subsequently, the particle diameter of the silicon oxide particles was regulated by classification. Thereafter, thermal CVD was performed within a range of 700°C to 950°C to coat surfaces of the silicon oxide particles with a carbon material.

Subsequently, by using an ether solvent in which water was reduced to 50 ppm, lithium was inserted into the silicon oxide particles by an oxidation-reduction method to perform modification.

In Examples 1 to 3, heating was performed thereafter within a range of 450°C to 700°C for further modification. This modification regulated a state of the Li silicate to be a state described in the following Table 1.

After the modification, the outermost surface of the silicon oxide particles was coated with a layer of dioctyl phthalate, which was a plasticizer, by using the aforementioned spray-drying method. A thickness of the layer of the plasticizer was 1 nm.

Thus, a negative electrode active material of each of Examples containing the negative electrode active material particles was obtained.

The following Table 1 shows the median diameter of the negative electrode active material particles contained in each of the negative electrode active materials, and a ratio of an intensity A of a peak derived from a Si (111) crystal face relative to an intensity B of a peak derived from a $Li_2SiO_3$ (111) crystal face of the negative electrode active material particles. The intensity ratio A/B was determined by XRD. Si contained in each of the negative electrode active materials was confirmed to be amorphous by XRD.

Then, the negative electrode active material produced as above (active material containing the modified silicon oxide particles), graphite, a conductive auxiliary 1 (carbon nanotube, CNT), a conductive auxiliary 2 (carbon fine particles having a median diameter of approximately 50 nm), sodium polyacrylate, and carboxymethylcellulose (hereinafter, referred to as CMC) were mixed at a dry mass ratio of 9.3 : 83.7 : 1 : 1 : 4 : 1, and then the mixture was diluted with pure water to prepare a negative electrode mixture slurry.

In this time, stability of the slurry was checked as a pot-life, and whether the slurry was stable or not after 72 hours was checked. The judgement can be made with whether hydrogen gas is generated or not from the slurry.

As a negative electrode current collector, an electrolytic copper foil with 15 um in thickness was used. This electrolytic copper foil contained carbon and sulfur at a concentration of each 70 mass-ppm. Finally, the negative electrode mixture slurry was applied on the negative electrode current collector, and dried in a vacuum atmosphere at 100°C over 1 hour. A deposition amount of a negative electrode active material layer per unit area (also referred to as "area density") on one surface of the negative electrode after the drying was 7.0 mg/cm$^2$.

[Assembly of Coin Battery for Test]

Next, solvents (ethylene carbonate (EC) and dimethyl carbonate (DMC)) were mixed, and then an electrolyte salt (lithium hexafluorophosphate: $LiPF_6$) was dissolved to prepare an electrolyte liquid. In this case, a composition of the solvents was EC : DMC = 30 : 70 at a volume ratio, and a content of the electrolyte salt was 1 mol/kg relative to the solvent. As additives, vinylene carbonate (VC) and fluoroethylene carbonate (FEC) were added at an amount of respectively 1.0 mass% and 2.0 mass%.

Then, a coin battery was assembled as follows. First, Li foil with 1 mm in thickness was punched to 16 mm in diameter, and adhered to an aluminum clad.

Thereafter, the obtained negative electrode was punched to 15 mm in diameter, disposed opposite to the Li foil attached to the aluminum clad via a separator, the electrolyte liquid was injected, and then a 2032 coin battery was produced.

[Measurement of First Efficiency

First efficiency was measured under the following conditions. First, the produced coin battery for the first efficiency test was charged (first charged) with a CCCV mode at a charge rate of equivalently 0.03 C. CV was 0 V, and the terminal current was 0.04 mA. Then, the coin battery was CC-discharged (first discharged) at a discharge rate of similarly 0.03 C and a discharge termination voltage of 1.2 V.

When the initial charge-discharge characteristics were determined, a first efficiency (hereinafter, which may be referred to as the initial efficiency) was calculated. The first efficiency was calculated with a formula represented by First efficiency (%) = (First discharge capacity / First charge capacity) $\times$ 100.

[Manufacture of Lithium-Ion Secondary Battery and Battery Evaluation]

From the obtained initial data, a counter positive electrode was designed so that a utilization rate of the negative electrode was 95%. The utilization rate was calculated based on the following formula from capacities of the positive and negative electrodes obtained from the counter electrode Li.

Utilization rate = (Positive electrode capacity - Negative electrode loss) / (Negative electrode capacity - Negative electrode loss) $\times$ 100

Based on this design, each of lithium-ion secondary batteries of Examples and Comparative Examples was produced. Each of the lithium-ion secondary batteries of Examples and Comparative Examples was subjected to battery evaluation.

The cycle characteristics were determined as follows. To stabilize the battery, under an atmosphere at 25°C, the battery was firstly charged and discharged at 0.2 C with two cycles to measure a discharge capacity at the 2nd cycle. The battery cycle characteristics were calculated from a discharge capacity at the 3rd cycle, and the battery test was stopped with 100 cycles. The charge was performed at 0.7 C, and the discharge was performed at 0.5 C. The charge voltage was 4.3 V, the discharge termination voltage was 2.5 V, and the charge termination rate was 0.07 C.

(Comparative Examples 1 to 6)

In Comparative Examples 1, 3, and 5, each of negative electrode active materials of Comparative Examples was manufactured in the same manner as in Example 2 except that the outermost layer of the silicon oxide particles was not coated with the layer of the plasticizer. In Comparative Examples 3 and 5, the modification treatment was performed after the Li-doping to regulate the state of the Li silicate as shown in Table 1.

In Comparative Examples 1, 3, and 5, negative electrode mixture slurries were produced in the same manner as above by using each of the negative electrode active materials of Comparative Examples. On the day same as manufacture of the negative electrode mixture slurry, negative electrodes were produced in the same manner as above by using the produced negative electrode mixture slurries.

In Comparative Examples 2, 4, and 6, the negative electrode mixture slurries respectively same as of Comparative Examples 1, 3, and 5, and on the next day, negative electrodes were produced in the same manner as above by using the produced negative electrode mixture slurries.

(Examples 4 to 18)

In Examples 4 to 18, negative electrode active materials and negative electrodes were produced in the same manner as in Example 1 except that the used plasticizer was changed as shown in Table 1. In Example 15, a mixture of N-ethyl-O-toluenesulfonamide and N-ethyl-p-toluenesulfonamide was used. In Example 16, a mixture of o-toluenesulfonamide and p-toluenesulfonamide was used.

(Examples 19 to 24)

Negative electrode active materials and negative electrodes were produced in the same manner as in Example 8 except that the thickness of the layer of the plasticizer was changed as shown in Table 2.

(Example 25)

In Example 25, a negative electrode active material and a negative electrode were produced in the same manner as in Example 8 except that the carbon layer was formed by using petroleum asphalt.

Specifically, petroleum asphalt was dissolved in toluene, and after separation with the spray-drying, a thermal treatment was performed. Thus, a hydrocarbon material derived from the petroleum asphalt was obtained. Then, the particle diameter of the silicon oxide particles produced in the aforementioned procedure was regulated by classification, and then kneaded with the hydrocarbon derived from the petroleum asphalt, and subjected to a thermal treatment at 870°C. Thereafter, the modification and the coating with the layer of the plasticizer were performed in the same manner as in Example 8 to obtain the negative electrode active material of Example 25.

(Examples 26 and 27)

In Examples 26 and 27, negative electrode active materials and negative electrodes were produced in the same manner as in Example 8 except that, in formation of the layer of the plasticizer, sufficiently-crushed lithium phosphate, or sufficiently-crushed lithium phosphate and sufficiently-crushed aluminum oxide were mixed with the plasticizer solution to make the lithium phosphate or the lithium phosphate and the aluminum oxide dispersed in the film.

(Examples 28 and 29)

In Example 28, a negative electrode active material and a negative electrode were produced in the same manner as in Example 26 except that the carbon layer was formed in the same manner as in Example 25.
In Example 29, a negative electrode active material and a negative electrode were produced in the same manner as in Example 27 except that the carbon layer was formed in the same manner as in Example 25.

(Examples 30 and 34)

In Examples 30 to 34, negative electrode active materials and negative electrodes were produced in the same manner as in Example 8 except that the crystallinity of Si and the Li silicate was changed as in the following Table 2.
Specifically, an ether solvent was used in Examples 30 to 34, and Li was inserted at a temperature of 10°C or more lower than the boiling point of the solvent. The temperature of the subsequent thermal treatment was changed within a range of 450°C or higher and 650°C or lower to regulate the crystallinity of the Li silicate and the crystallinity of Si.

(Examples 35 to 41)

In Examples 35 to 41, negative electrode active materials were manufactured in the same manner as in Example 8 except that the particle diameter of the silicon oxide particles was regulated by classification so that the median diameter of the negative electrode active material particles to be manufactured was a value shown in the following Table 2.
The following Tables 1 and 2 summarize the parameters of each of the negative electrode active materials of Examples and Comparative Examples. The following Tables 3 and 4 summarize a capacity retention ratio until the 500th cycle of each of the lithium-ion secondary batteries of Examples and Comparative Examples and stability of the negative electrode mixture slurry produced by using each of the negative electrode active materials.

[Table 1]

| | Particle diameter [$\mu$m] | Li silicate | Layer of plasticizer | | | Carbon layer | XRD | |
| | | | Kind of plasticizer | Layer thickness [nm] | Solid electrolyte | | Peak intensity ratio between Si (111) and Li$_2$SiO$_3$ (111) | Si(111) |
|---|---|---|---|---|---|---|---|---|
| Comparative Example 1 | 6.5 | Li$_4$SiO$_4$ | None | None | None | CVD | 0.55 | Amorphous |
| Comparative Example 2 | 6.5 | Li$_4$SiO$_4$ | None | None | None | CVD | 0.55 | Amorphous |
| Comparative Example 3 | 6.5 | Li$_2$SiO$_3$ | None | None | None | CVD | 0.55 | Amorphous |
| Comparative Example 4 | 6.5 | Li$_2$SiO$_3$ | None | None | None | CVD | 0.55 | Amorphous |
| Comparative Example 5 | 6.5 | Li$_2$SiO$_3$, Li$_6$Si$_2$O$_7$ | None | None | None | CVD | 0.55 | Amorphous |
| Comparative Example 6 | 6.5 | Li$_2$SiO$_3$, Li$_6$Si$_2$O$_7$ | None | None | None | CVD | 0.55 | Amorphous |
| Example 1 | 6.5 | Li$_2$SiO$_3$ | Diocty phalate | 2 | None | CVD | 0.55 | Amorphous |
| Example 2 | 6.5 | Li$_4$SiO$_4$ | Diocty phalate | 2 | None | CVD | 0.55 | Amorphous |
| Example 3 | 6.5 | Li$_2$SiO$_3$, Li$_6$Si$_2$O$_7$ | Diocty phalate | 2 | None | CVD | 0.55 | Amorphous |
| Example 4 | 6.5 | Li$_2$SiO$_3$ | Dibutoxvethyl phthalate | 2 | None | CVD | 0.55 | Amorphous |
| Example 5 | 6.5 | Li$_2$SiO$_3$ | Diisononyl phthalate | 2 | None | CVD | 0.55 | Amorphous |
| Example 6 | 6.5 | Li$_2$SiO$_3$ | Diisoderyl phthalate | 2 | None | CVD | 0.55 | Amorphous |
| Example 7 | 6.5 | Li$_2$SiO$_3$ | Diundecyl phthalate | 2 | None | CVD | 0.55 | Amorphous |
| Example 8 | 6.5 | Li$_2$SiO$_3$ | Bis(2-ethylhexyl) adipate | 2 | None | CVD | 0.55 | Amorphous |
| Example 9 | 6.5 | Li$_2$SiO$_3$ | Diisononyl adipate | 2 | None | CVD | 0.55 | Amorphous |
| Example 10 | 6.5 | Li$_2$SiO$_3$ | Diisodecyl adipate | 2 | None | CVD | 0.55 | Amorphous |
| Example 11 | 6.5 | Li$_2$SiO$_3$ | Bis(2-butoxvethyl) adipate | 2 | None | CVD | 0.55 | Amorphous |
| Example 12 | 6.5 | Li$_2$SiO$_3$ | Triphenyl phosphate | 2 | None | CVD | 0.55 | Amorphous |

(continued)

| | Particle diameter [μm] | Li silicate | Layer of plasticizer | | | Carbon layer | XRD | |
|---|---|---|---|---|---|---|---|---|
| | | | Kind of plasticizer | Layer thickness [nm] | Solid electrolyte | | Peak intensity ratio between Si (111) and $Li_2SiO_3$ (111) | Si(111) |
| Example 13 | 6.5 | $Li_2SiO_3$ | Adipate polyester CAS NO. 88650-57-1 | 2 | None | CVD | 0.55 | Amorphous |
| Example 14 | 6.5 | $Li_2SiO_3$ | p-Toluenesulfonamide | 2 | None | CVD | 0.55 | Amorphous |
| Example 15 | 6.5 | $Li_2SiO_3$ | N-ethyl-o/p-toluenesulfonamide | 2 | None | CVD | 0.55 | Amorphous |
| Example 16 | 6.5 | $Li_2SiO_3$ | o/p-Toluenesulfonamide | 2 | None | CVD | 0.55 | Amorphous |
| Example 17 | 6.5 | $Li_2SiO_3$ | N-n-butvl benzenesulfona-mide | 2 | None | CVD | 0.55 | Amorphous |
| Example 18 | 6.5 | $Li_2SiO_3$ | N-cyclohexyl-p-toluenesul-fonamide | 2 | None | CVD | 0.55 | Amorphous |

[Table 2]

| | Particle diameter [μm] | Li silicate | Layer of plasticizer | | | Carbon layer | XRD | |
| --- | --- | --- | --- | --- | --- | --- | --- | --- |
| | | | Kind of plasticizer | Layer thickness [nm] | Solid electrolyte | | Peak intensity ratio between Si(111) and $Li_2SiO_3$ (111) | Si(111) |
| Example 19 | 6.5 | $Li_2SiO_3$ | Bis(2-ethyl-hexyl) adi-pate | 0.1 | None | CVD | 0.55 | Amorphous |
| Example 20 | 6.5 | $Li_2SiO_3$ | Bis(2-ethyl-hexyl) adi-pate | 0.5 | None | CVD | 0.55 | Amorphous |
| Example 21 | 6.5 | $Li_2SiO_3$ | Bis(2-ethyl-hexyl) adi-pate | 1 | None | CVD | 0.55 | Amorphous |
| Example 22 | 6.5 | $Li_2SiO_3$ | Bis(2-ethyl-hexyl) adi-pate | 5 | None | CVD | 0.55 | Amorphous |
| Example 23 | 6.5 | $Li_2SiO_3$ | Bis(2-ethyl-hexyl) adi-pate | 10 | None | CVD | 0.55 | Amorphous |
| Example 24 | 6.5 | $Li_2SiO_3$ | Bis(2-ethyl-hexyl) adi-pate | 15 | None | CVD | 0.55 | Amorphous |
| Example 25 | 6.5 | $Li_2SiO_3$ | Bis(2-ethyl-hexyl) adi-pate | 2 | None | Petroleum asphalt | 0.55 | Amorphous |
| Example 26 | 6.5 | $Li_2SiO_3$ | Bis(2-ethyl-hexyl) adi-pate | 2 | Lithium phosphate | CVD | 0.55 | Amorphous |
| Example 27 | 6.5 | $Li_2SiO_3$ | Bis(2-ethyl-hexyl) adi-pate | 2 | Lithium phosphate, aluminum oxide | CVD | 0.55 | Amorphous |
| Example 28 | 6.5 | $Li_2SiO_3$ | Bis(2-ethyl-hexyl) adi-pate | 2 | Lithium phosphate | Petroleum asphalt | 0.55 | Amorphous |
| Example 29 | 6.5 | $Li_2SiO_3$ | Bis(2-ethyl-hexyl) adi-pate | 2 | Lithium phosphate, aluminum oxide | Petroleum asphalt | 0.55 | Amorphous |
| Example 30 | 6.5 | $Li_2SiO_3$ | Bis(2-ethyl-hexyl) adi-pate | 2 | None | CVD | 1.67 | 9.2 nm |
| Example 31 | 6.5 | $Li_2SiO_3$ | Bis(2-ethyl-hexyl) adi-pate | 2 | None | CVD | 102 | 5nm |

(continued)

| | Particle diameter [μm] | Li silicate | Kind of plasticizer | Layer thickness [nm] | Solid electrolyte | Carbon layer | Peak intensity ratio between Si(111) and Li$_2$SiO$_3$ (111) | Si(111) |
|---|---|---|---|---|---|---|---|---|
| | | | **Layer of plasticizer** | | | | **XRD** | |
| Example 32 | 6.5 | Li$_2$SiO$_3$ | Bis(2-ethylhexyl) adipate | 2 | None | CVD | 0.71 | 3.8 nm |
| Example 33 | 6.5 | Li$_2$SiO$_3$ | Bis(2-ethylhexyl) adipate | 2 | None | CVD | 0.67 | 2.2 nm |
| Example 34 | 6.5 | Li$_2$SiO$_3$ | Bis(2-ethylhexyl) adipate | 2 | None | CVD | 0.56 | 1.1 nm |
| Example 35 | 4 | Li$_2$SiO$_3$ | Bis(2-ethylhexyl) adipate | 2 | None | CVD | 0.55 | Amorphous |
| Example 36 | 4.5 | Li$_2$SiO$_3$ | Bis(2-ethylhexyl) adipate | 2 | None | CVD | 0.55 | Amorphous |
| Example 37 | 5.5 | Li$_2$SiO$_3$ | Bis(2-ethylhexyl) adipate | 2 | None | CVD | 0.55 | Amorphous |
| Example 38 | 9 | Li$_2$SiO$_3$ | Bis(2-ethylhexyl) adipate | 2 | None | CVD | 0.55 | Amorphous |
| Example 39 | 12 | Li$_2$SiO$_3$ | Bis(2-ethylhexyl) adipate | 2 | None | CVD | 0.55 | Amorphous |
| Example 40 | 15 | Li$_2$SiO$_3$ | Bis(2-ethylhexyl) adipate | 2 | None | CVD | 0.55 | Amorphous |
| Example 41 | 17 | Li$_2$SiO$_3$ | Bis(2-ethylhexyl) adipate | 2 | None | CVD | 0.55 | Amorphous |

[Table 3]

| | Capacity retention ratio until 500th cycle [%] | Slurry stability /described as 72 hours or longer |
|---|---|---|
| Comparative Example 1 | 86 | Applied on the same day as slurry formation |
| Comparative Example 2 | 48 | Applied on the next day of slurry formation /stability 8 hours |
| Comparative Example 3 | 84 | Applied on the same day as slurry formation |

(continued)

| | Capacity retention ratio until 500th cycle [%] | Slurry stability /described as 72 hours or longer |
|---|---|---|
| Comparative Example 4 | 61 | Applied on the next day of slurry formation /stability 18 hours |
| Comparative Example 5 | 85 | Applied on the same day as slurry formation |
| Comparative Example 6 | 55 | Applied on the next day of slurry formation /stability 15 hours |
| Example 1 | 85 | Applied on the next day of slurry formation /stability 72 hours or longer |
| Example 2 | 88 | Applied on the next day of slurry formation /stability 48 hours |
| Example 3 | 86 | Applied on the next day of slurry formation /stability 72 hours |
| Example 4 | 84 | Applied on the next day of slurry formation /stability 72 hours or longer |
| Example 5 | 85 | Applied on the next day of slurry formation /stability 72 hours or longer |
| Example 6 | 86 | Applied on the next day of slurry formation /stability 72 hours or longer |
| Example 7 | 85 | Applied on the next day of slurry formation /stability 72 hours or longer |
| Example 8 | 85 | Applied on the next day of slurry formation /stability 72 hours or longer |
| Example 9 | 84 | Applied on the next day of slurry formation /stability 72 hours or longer |
| Example 10 | 85 | Applied on the next day of slurry formation /stability 72 hours or longer |
| Example 11 | 83 | Applied on the next day of slurry formation /stability 72 hours or longer |
| Example 12 | 84 | Applied on the next day of slurry formation /stability 72 hours or longer |
| Example 13 | 85 | Applied on the next day of slurry formation /stability 72 hours or longer |
| Example 14 | 84 | Applied on the next day of slurry formation /stability 72 hours or longer |
| Example 15 | 83 | Applied on the next day of slurry formation /stability 72 hours or longer |
| Example 16 | 85 | Applied on the next day of slurry formation /stability 72 hours or longer |
| Example 17 | 84 | Applied on the next day of slurry formation /stability 72 hours or longer |
| Example 18 | 84 | Applied on the next day of slurry formation /stability 72 hours or longer |
| Example 19 | 83 | Applied on the next day of slurry formation /stability 48 hours or longer |

(continued)

|  | Capacity retention ratio until 500th cycle [%] | Slurry stability /described as 72 hours or longer |
|---|---|---|
| Example 20 | 83 | Applied on the next day of slurry formation /stability 72 hours or longer |

[Table 4]

|  | Capacity retention ratio until 500th cycle [%] | Slurry stability /described as 72 hours or longer |
|---|---|---|
| Example 21 | 85 | Applied on the next day of slurry formation /stability 72 hours or longer |
| Example 22 | 82 | Applied on the next day of slurry formation /stability 72 hours or longer |
| Example 23 | 81 | Applied on the next day of slurry formation /stability 72 hours or longer |
| Example 24 | 74 | Applied on the next day of slurry formation /stability 72 hours or longer |
| Example 25 | 83 | Applied on the next day of slurry formation /stability 72 hours or longer |
| Example 26 | 88 | Applied on the next day of slurry formation /stability 72 hours or longer |
| Example 27 | 89 | Applied on the next day of slurry formation /stability 72 hours or longer |
| Example 28 | 87 | Applied on the next day of slurry formation /stability 72 hours or longer |
| Example 29 | 88 | Applied on the next day of slurry formation /stability 72 hours or longer |
| Example 30 | 74 | Applied on the next day of slurry formation /stability 72 hours or longer |
| Example 31 | 80 | Applied on the next day of slurry formation /stability 72 hours or longer |
| Example 32 | 81 | Applied on the next day of slurry formation /stability 72 hours or longer |
| Example 33 | 82 | Applied on the next day of slurry formation /stability 72 hours or longer |
| Example 34 | 83 | Applied on the next day of slurry formation /stability 72 hours or longer |
| Example 35 | 79 | Applied on the next day of slurry formation /stability 72 hours or longer |
| Example 36 | 81 | Applied on the next day of slurry formation /stability 72 hours or longer |
| Example 37 | 82 | Applied on the next day of slurry formation /stability 72 hours or longer |
| Example 38 | 86 | Applied on the next day of slurry formation /stability 72 hours or longer |
| Example 39 | 87 | Applied on the next day of slurry formation /stability 72 hours or longer |
| Example 40 | 83 | Applied on the next day of slurry formation /stability 72 hours or longer |
| Example 41 | 79 | Applied on the next day of slurry formation /stability 72 hours or longer |

[Evaluation]

In Comparative Examples 1 to 6, the plasticizer was not used for the outermost layer to prepare the slurry. With each of the Li silicates, good characteristics were obtained as results of Comparative Examples 1, 3, and 5 shown in Table 3 on the day of the paint formation (slurry formation), but gas was generated from the slurry and the viscosity of the thickener was decreased on the next day, resulting in considerably deteriorated long-term characteristics of the battery, as results of Comparative Examples 2, 4, and 6 shown in Table 3.

The pot-life of the slurries prepared by using the negative electrode active materials of Comparative Examples was 18 hours or shorter as shown in Table 3. Since the pot-life of the slurry is usually required to be 48 hours or longer, this result means that the negative electrode active materials of Comparative Examples 1 to 6 are industrially not useful.

Meanwhile, as shown in Tables 3 and 4, the negative electrode active materials of Examples 1 to 41 exhibited excellent long-term characteristics of the battery even when applied to produce the negative electrodes on the next day of the slurry formation.

In addition, the pot-life of the slurries prepared by using the negative electrode active materials of Examples 1 to 41 was 48 hours or longer, as shown in Tables 3 and 4. This result means that the negative electrode active materials of Examples 1 to 41 satisfy the usual requirement of the pot-life of the slurry, and thus are industrially useful.

Hereinafter, each Example will be mentioned.

Example 1 was an example in which thermal load was applied after the Li-doping to form $Li_2SiO_3$ and the layer of dioctyl phthalate was formed as the layer of the plasticizer on the outermost layer of the negative electrode active material particles. In this example, it is consider that the coating film with good quality by virtue of the plasticizer was obtained, and the high slurry stability was obtained.

Example 2 was an example in which the layer of dioctyl phthalate was formed as the layer of the plasticizer on the outermost layer of the negative electrode active material particles after the Li-doping. In this example, $Li_4SiO_4$ present inside bulk was unstable substance but durability (slurry stability) of 48 hours, minimal requirement, was confirmed.

Example 3 was an example in which the layer of the plasticizer was formed on the outermost layer of the negative electrode active material particles after the Li-doping in a state of remaining a part of $Li_6Si_2O_7$ inside bulk. The slurry prepared by using the negative electrode active material of Example 3 was rather unstable compared with Example 1, but durability (slurry stability) of 72 hours was confirmed.

In Examples 4 to 18, stability was confirmed by using various plasticizers. As a result, it was found that good slurry stability was obtained even when the kind of the plasticizer varied.

In Examples 19 to 24, the film thickness of the layer of the plasticizer was changed. It was confirmed that the sufficient durability (slurry stability) was obtained even when the thickness of the layer of the plasticizer was 0.1 nm.

In Examples and Comparative Examples, the film thickness was calculated from change in mass before and after the treatment. This is because the thickness was too thin to be directly observed. However, it is considered that the coating was not perfect and a partially exposed portion is present. Note that the coating was confirmed to be within an extent durable for practical use.

From the results of Example 8 and Examples 19 to 24, it was found that when the thickness of the layer of the plasticizer of 0.1 nm or more and 10 nm less, more excellent cycle characteristics was exhibited. This is presumably because, when the layer of the plasticizer having a thickness within a range of 0.1 nm or more and 10 mm or less, sufficient Li permeability can be exhibited.

From comparison of the results of Example 25 and Example 8, it was confirmed that the characteristics close to those by CVD were obtained even when the carbon layer was formed with the petroleum asphalt.

Examples 26 to 29 were examples in which the crushed product of the solid electrolyte was mixed into the layer of the plasticizer. From comparison of the results of Examples 8 and 25 and the results of Examples 26 to 29, it is found that the cycle characteristics can be further improved by mixing the crushed product of the solid electrolyte into the layer of the plasticizer. From this result, it was confirmed that by mixing the crushed product of the solid electrolyte into the layer of the plasticizer, Li ions permeating the layer of the plasticizer can smoothly go in and out, resulting in improvement of the battery characteristics.

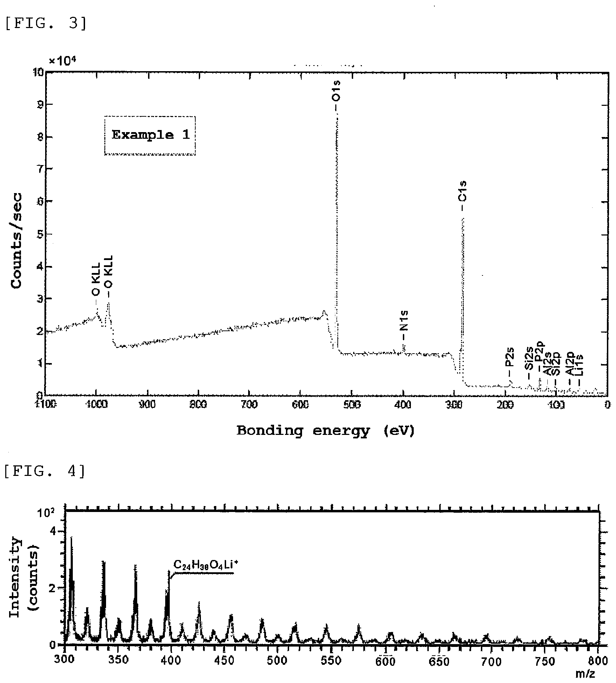

FIG. 3 shows an X-ray photoelectron spectrum of the surface of the negative electrode active material of Example 1. FIG. 4 shows a TOF-SIMS spectrum of the surface of the negative electrode active material of Example 1. The following Table 5 shows the measurement conditions of the TOF-SIMS.

[Table 5]

| Sample: Negative electrode active material particles of Example 1 | |
|---|---|
| Secondary ion polarity: positive | |
| Mass range (m/z): 0 to 1500 | Primary ion species: $Bi_3^{++}$ |
| Raster size: 300 $\mu$m in square | Primary ion acceleration voltage: 30 kV |
| Number of scanning: 16 | Pulse width: 12.5 ns |
| Number of pixels (per side): 256 | Punching: present (high-mass resolution measurement) |
| Vacuum degree in measurement (before sample introduction) : $4\times10^{-7}$ Pa ($4\times10^{-9}$ mbar) or less | Charge neutralization: none |
| | Post acceleration: 9.5 kV |

From the X-ray photoelectron spectrum shown in FIG. 3, dioctyl phthalate on the outermost surface of the negative electrode active material of Example 1 was not observed. Meanwhile, from the TOF-SIMS spectrum shown in FIG. 4, a peak attributed to $C_{24}H_{38}O_4Li^+$ was detected. By virtue of the presence of this peak, the presence of the layer of dioctyl phthalate on the outermost surface of the negative electrode active material particles was found.

From the results of Examples 30 to 34 and Example 8, it was found that the crystallinity of Si is desirably substantially amorphous.

This Li silicate and crystallization of Si estimated by XRD are important as control parameters, which significantly vary depending on the conditions for the Li insertion and the thermal treatment conditions.

From the results shown in Table 3 and Table 4, it is found that Examples 35 to 41 and Example 8, which use the negative electrode active material particles having different median dimeters, can exhibit similar excellent cycle battery characteristics.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

**Claims**

1. A negative electrode active material, comprising negative electrode active material particles, wherein

   the negative electrode active material particles contain silicon oxide particles coated with a carbon layer,
   at least a part of the silicon oxide particles contains at least one selected from the group consisting of $Li_2SiO_3$, $Li_4SiO_4$, and $Li_6Si_2O_7$, and
   a part of at least an outermost layer of the negative electrode active material particles is coated with a layer of a plasticizer.

2. The negative electrode active material according to claim 1, wherein the layer of the plasticizer has a thickness of 0.1 nm or more and 10 nm or less.

3. The negative electrode active material according to claim 1 or 2, wherein a part of the carbon layer contains a nitrogen atom.

4. The negative electrode active material according to claim 3, wherein the carbon layer is formed with a hydrocarbon material derived from petroleum asphalt as a starting material, and a part thereof contains the nitrogen atom.

5. The negative electrode active material according to any one of claims 1 to 4, wherein the plasticizer contains at least one selected from the group consisting of a phthalate ester plasticizer, an adipate ester plasticizer, a phosphate ester plasticizer, and a sulfonamide plasticizer.

6. The negative electrode active material according to claim 5, wherein the plasticizer contains at least one selected from the group consisting of dioctyl phthalate, dibutoxyethyl phthalate, diisononyl phthalate, diisodecyl phthalate, diundecyl phthalate, bis(2-ethylhexyl) adipate, diisononyl adipate, diisodecyl adipate, bis(2-butoxyethyl) adipate, triphenyl phosphate, a phthalate-based polyester, an adipate-based polyester, an epoxidated vegetable oil, p-toluenesulfonamide, N-ethyl-o-toluenesulfonamide, N-ethyl-p-toluenesulfonamide, o-toluenesulfonamide, p-toluenesulfonamide, N-n-butylbenzenesulfonamide, and N-cyclohexyl-p-toluenesulfonamide.

7. The negative electrode active material according to any one of claims 1 to 6, wherein the layer of the plasticizer further comprises a solid electrolyte.

8. The negative electrode active material according to claim 7, wherein the solid electrolyte contains lithium phosphate and/or aluminum oxide.

9. The negative electrode active material according to any one of claims 1 to 7, wherein the negative electrode active material particles before charge-and-discharge have a peak derived from a Si (111) crystal face obtained by X-ray diffraction using Cu-K$\alpha$ radiation, a crystallite size corresponding to the crystal face is 5.0 nm or less, and a ratio A/B of an intensity A of the peak derived from the Si (111) face relative to an intensity B of a peak derived from a $Li_2SiO_3$ (111) crystal face satisfies the following formula (1),

$$0.4 \leq A/B \leq 1.0 \quad ...(1).$$

10. The negative electrode active material according to any one of claims 1 to 9, wherein the negative electrode active material particles have a median diameter of 4.5 um or more and 15 um or less.

11. A negative electrode, comprising the negative electrode active material according to any one of claims 1 to 10.

[FIG. 1]

[FIG. 2]

[FIG. 3]

[FIG. 4]

## INTERNATIONAL SEARCH REPORT

| International application No. |
|---|
| **PCT/JP2022/044441** |

**A. CLASSIFICATION OF SUBJECT MATTER**

*H01M 4/48*(2010.01)i; *C01B 33/32*(2006.01)i; *H01M 4/36*(2006.01)i; *H01M 4/485*(2010.01)i
FI:   H01M4/48; H01M4/36 C; H01M4/485; H01M4/36 A; C01B33/32

According to International Patent Classification (IPC) or to both national classification and IPC

**B. FIELDS SEARCHED**

Minimum documentation searched (classification system followed by classification symbols)

H01M4/48; C01B33/32; H01M4/36; H01M4/485

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2018/061536 A1 (SHIN-ETSU CHEMICAL COMPANY, LIMITED) 05 April 2018 (2018-04-05) <br> entire text | 1-11 |
| A | WO 2020/149079 A1 (SHIN-ETSU CHEMICAL COMPANY, LIMITED) 23 July 2020 (2020-07-23) <br> entire text | 1-11 |
| A | WO 2017/145654 A1 (SHIN-ETSU CHEMICAL COMPANY, LIMITED) 31 August 2017 (2017-08-31) <br> entire text | 1-11 |
| A | WO 2020/262647 A1 (MURATA MANUFACTURING COMPANY, LIMITED) 30 December 2020 (2020-12-30) <br> entire text | 1-11 |
| A | JP 2017-188451 A (SANYO CHEM. IND. LIMITED) 12 October 2017 (2017-10-12) <br> entire text | 1-11 |

☑ Further documents are listed in the continuation of Box C.      ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 January 2023** | **14 February 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

International application No.

**PCT/JP2022/044441**

## C.    DOCUMENTS CONSIDERED TO BE RELEVANT

| Category* | Citation of document, with indication, where appropriate, of the relevant passages | Relevant to claim No. |
|---|---|---|
| A | US 2017/0271723 A1 (NINGDE AMPEREX TECHNOLOGY LIMITED) 21 September 2017 (2017-09-21)<br>        entire text | 1-11 |
| P, A | WO 2022/039201 A1 (APB CORPORATION) 24 February 2022 (2022-02-24)<br>        entire text | 1-11 |

Form PCT/ISA/210 (second sheet) (January 2015)

EP 4 465 384 A1

International application No.

**PCT/JP2022/044441**

| Patent document cited in search report | | | Publication date (day/month/year) | Patent family member(s) | | | Publication date (day/month/year) |
|---|---|---|---|---|---|---|---|
| WO | 2018/061536 | A1 | 05 April 2018 | US | 2019/0229332 | A1 | |
| | | | | entire text | | | |
| | | | | EP | 3522271 | A1 | |
| | | | | CN | 109792047 | A | |
| | | | | KR | 10-2019-0059906 | A | |
| | | | | TW | 201826599 | A | |
| | | | | JP | 2018-60771 | A | |
| WO | 2020/149079 | A1 | 23 July 2020 | US | 2022/0109148 | A1 | |
| | | | | entire text | | | |
| | | | | EP | 3913710 | A1 | |
| | | | | CN | 113366672 | A | |
| | | | | KR | 10-2021-0110606 | A | |
| | | | | TW | 202032838 | A | |
| | | | | JP | 2020-113465 | A | |
| WO | 2017/145654 | A1 | 31 August 2017 | US | 2019/0214637 | A1 | |
| | | | | entire text | | | |
| | | | | EP | 3407408 | A1 | |
| | | | | CN | 108701825 | A | |
| | | | | KR | 10-2018-0114061 | A | |
| | | | | TW | 201810780 | A | |
| | | | | CN | 113380982 | A | |
| | | | | JP | 2017-152358 | A | |
| WO | 2020/262647 | A1 | 30 December 2020 | US | 2022/0085355 | A1 | |
| | | | | entire text | | | |
| | | | | CN | 113892201 | A | |
| JP | 2017-188451 | A | 12 October 2017 | (Family: none) | | | |
| US | 2017/0271723 | A1 | 21 September 2017 | CN | 107195867 | A | |
| WO | 2022/039201 | A1 | 24 February 2022 | JP | 2022-34339 | A | |
| | | | | JP | 2022-34513 | A | |

Form PCT/ISA/210 (patent family annex) (January 2015)

**EP 4 465 384 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001185127 A
- JP 2002042806 A
- JP 2006164954 A
- JP 2006114454 A
- JP 2009070825 A
- JP 2008282819 A
- JP 2008251369 A
- JP 2008177346 A
- JP 2007234255 A
- JP 2009212074 A
- JP 2009205950 A
- JP H06325765 A
- JP 2015156355 A

**Non-patent literature cited in the description**

- Denchi (battery). *Battery Association of Japan, Newsletter*, 01 May 2010, 10
- **A. HOHL** ; **T. WIEDER** ; **P. A. VAN AKEN** ; **T. E. WEIRICH** ; **G. DENNINGER** ; **M. VIDAL** ; **S. OSWALD** ; **C. DENEKE** ; **J. MAYER** ; **H. FUESS**. *J. Non-Cryst. Solids*, 2003, vol. 320, 255
- **V. KAPAKLIS**. *J. Non-Crystalline Solids*, 2008, vol. 354, 612
- **MARIKO MIYACHI** ; **HIRONORI YAMAMOTO** ; **HIDEMASA KAWAI**. *J. Electrochem. Soc.*, 2007, vol. 154 (4), A376-A380
- **M. YAMADA** ; **A. INABA** ; **A. UEDA** ; **K. MATSU-MOTO** ; **T. IWASAKI** ; **T. OHZUKU**. *J. Electrochem. Soc.*, 2012, vol. 159, A1630
- **TAEAHN KIM** ; **SANGJIN PARK** ; **SEUNG M. OH**. *J. Electrochem. Soc.*, 2007, vol. 154, A1112-A1117
- **HYE JIN KIM** ; **SUNGHUN CHOI** ; **SEUNG JONG LEE** ; **MYUNG WON SEO** ; **JAE GOO LEE** ; **ERHAN DENIZ** ; **YONG JU LEE** ; **EUN KYUNG KIM** ; **JANG WOOK CHOI**. *Nano Lett.*, 2016, vol. 16, 282-288
- *CHEMICAL ABSTRACTS*, 88650-57-1